**Europäisches Patentamt**

(19) **European Patent Office**

**Office européen des brevets**

(11) Veröffentlichungsnummer: **0 189 875**
**B1**

(12) **EUROPÄISCHE PATENTSCHRIFT**

(45) Veröffentlichungstag der Patentschrift:
04.10.89

(21) Anmeldenummer: 86100996.7

(22) Anmeldetag: 24.01.86

(51) Int. Cl.⁴: **F 02 C 7/27, F 02 C 7/32 //**
**F02C6/06, F01D25/18,**
**F01D25/22**

(54) **Hilfsantrieb für ein Gasturbinentriebwerk.**

(30) Priorität: 26.01.85 DE 3502578

(43) Veröffentlichungstag der Anmeldung:
06.08.86 Patentblatt 86/32

(45) Bekanntmachung des Hinweises auf die Patenterteilung:
04.10.89 Patentblatt 89/40

(84) Benannte Vertragsstaaten:
**BE DE FR GB IT NL**

(56) Entgegenhaltungen:
**EP-A-0 025 526**
**CH-A-375 956**
**DE-A-1 601 618**
**DE-A-2 053 291**
**DE-B-1 057 882**
**FR-A-2 097 450**
**FR-A-2 527 266**
**GB-A-670 309**
**GB-A-748 088**
**GB-A-1 062 750**
**GB-A-1 103 417**
**GB-A-2 055 430**
**GB-A-2 063 188**
**GB-A-2 144 904**
**NL-A-7 404 223**
**US-A-2 914 918**

(73) Patentinhaber: **Klöckner- Humboldt- Deutz**
**Aktiengesellschaft, Deutz- Mülheimer- Strasse**
**111 Postfach 80 05 09, D-5000 Köln 80 (DE)**

(72) Erfinder: **Schreiber, Erich, Dipl.- Ing., Jahnstrasse**
**16, D-6393 Wehrheim 1 (DE)**
Erfinder: **Steiner, Kurt, Dipl.- Ing., Taunusstrasse**
**24, D-6382 Friedrichsdorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung bezieht sich auf einen Hilfsantrieb für zumindest ein Gasturbinentriebwerk nach dem Oberbegriff des Anspruchs 1.

Gasturbinentriebwerke sind häufig als Strahltriebwerke in Flugzeugen eingebaut. Um das Flugzeug unabhängig von einer auf dem Boden stationierten Energieversorgung zu machen, ist es üblich geworden, zum Starten des Gasturbinentriebwerkes einen Hilfsantrieb (auch Auxiliary Power Unit APU genannt) in das Flugzeug einzubauen. Dieser Hilfsantrieb ist zumeist eine entsprechend klein dimensionierte Gasturbine, die ihre Energie während des Startvorgangs auf das Gasturbinentriebwerk überträgt. Häufig wird mit dem Hilfsantrieb auch die gesamte Energieversorgung während des Prüfvorganges des Flugzeuges und des Triebwerks vor dem eigentlichen Start sichergestellt.

Ein derartiger Hilfsantrieb ist aus der DE-OS-2 053 291 bekannt. Es handelt sich hierbei um eine einwellige Hilfsgasturbine, die wie gewöhnlich aus einem Verdichter, einer Brennkammer und einer Turbine besteht. Zur Energieübertragung von der Hilfsgasturbine an das Gasturbinentriebwerk, ist auf dem Einwellen-Rotor des Hilfsantriebs ein weiterer Verdichter angeordnet, der Druckluft zu einer Luftturbine des Gasturbinentriebwerks führt. Die Energieübertragung geschieht demnach vollkommen pneumatisch.

Der Hilfsantrieb weist ansonsten ein Getriebe auf, welches mit dem Rotor verbunden ist und die Hilfsaggregate des Hilfsantriebs, wie z. B. die Brennstoffpumpe, antreibt.

Nachteilig an diesem Hilfsantrieb ist, daß es bei einem relativ hohen Gewicht und großen Platzbedarf zu Ausfällen kommen kann. Jedes Getriebe muß geschmiert werden, wozu diverse Bauteile wie z. B. Ölpumpe, Ölfilter, ggfs. Wärmetauscher und Rohrleitungen notwendig sind. Diese beanspruchen Platz, erhöhen das Gewicht und sind einem Verschleiß unterworfen, so daß es bei ungünstigen Umständen zu einem Ausfall der Schmierung kommen kann, was in der Regel zu einem Ausfall des Triebwerks führt.

Der Erfindung liegt die Aufgabe zugrunde, einen Hilfsantrieb für zumindest ein Gasturbinentriebwerk zu schaffen, welcher leicht ist, wenig Platz beansprucht und zuverlässig ausgebildet ist. Des Weiteren soll eine sichere, platzsparende und den Anforderungen leicht anzupassende Energieübertragung an das Gasturbinenwerk sichergestellt sein.

Diese Aufgabe wird durch die kennzeichnenden Merkmale des Anspruchs 1 gelöst.

Erfindungsgemäß ist das gesamte herkömmliche Schmiermittelsystem weggelassen worden. Der Hilfsantrieb bildet daher eine einfache und gewichtssparende Gasturbine. Dadurch, daß ein Starter und ein Generator unmittelbar mit dem Rotor fest verbunden sind und die Hilfsaggregate elektrisch angetrieben werden, ist keine Schmierung der Hilfsaggregate nötig. Insgesamt zeichnet sich der erfindungsgemäße Hilfsantrieb infolge der kleinen Teilezahl durch geringen Wartungsaufwand und hohe Zuverlässigkeit in Verbindung mit niedrigen Herstellungskosten aus.

Besonders zweckmäßig und gewichtsgünstig kann in Weiterbildung der Erfindung der Starter und der Generator zu einem beide Aufgaben übernehmenden Starter/Generator zusammengefasst sein.

In einer weiteren Ausgestaltung der Erfindung ist die Lagerung des Rotors des Hilfsantriebs in zumindest einem mangelgeschmiertem, hochtourigen Wälzlager vorgesehen. Eine derartige Lagerung benötigt keine herkömmliche Ölversorgung und ist daher sehr gewichtsgünstig. Derartige mangelgeschmierte Lager kommen, wie der Name dies schon sagt, nahezu vollständig ohne Schmiermittel aus. Es ist lediglich eine außerordentlich geringe Schmiermittelzufuhr notwendig, die aus einem kleinen, in den Hilfsantrieb integrierten Tank erfolgen kann. Das Schmiermittel tritt dabei etwa tröpfchenweise in das Lager ein und wird nicht wieder in den Tank zurückgeführt. Beispielsweise kann ein Verbrauch von 0,2 Liter Schmiermittel auf 500 bis 2000 Betriebsstunden erreichbar sein. Das Schmiermittel könnte durch Fliehkräfte gefördert werden.

Alternativ kann auch eine Gleitlagerung mit Luftschmierung verwendet werden, die unter dem Begriff Luftlager bekannt ist. In diesem Fall wird der Rotor quasi auf einem Luftpolster gelagert. Eine Schmiermittelversorgung kann in vorteilhafter Weise ganz entfallen.

Als zweckmäßig hat sich erwiesen den Rotor des Hilfsantriebs in zwei Lagern zu lagern, wobei das turbinenseitige Lager ein Luftlager ist und das verdichterseitige ein mangelgeschmiertes Wälzlager. Dadurch entfällt ein herkömmliches Schmiermittelsystem. Das turbinenseitige Lager ist wegen der dortigen Hitzeentwicklung vorteilhaft als problemloses Luftlager ausgebildet. Für manche Anwendungen können vorteilhaft durchaus für beide Lager Luftlager verwendet werden.

Die pneumatische Energie einer derartigen gewichtsoptimierten als Hilfsantrieb verwendeten Gasturbine wird in vorteilhafter Weiterbildung der Erfindung auf eine Luftturbine geleitet, die über ein Getriebe wiederum das Gasturbinentriebwerk mechanisch antreibt. Das Getriebe kann dabei gleichzeitig zum Antrieb eines Generators und einer Hydraulikpumpe dienen. Es können von dem Getriebe auch noch weitere Hilfeinrichtungen für das Gasturbinentriebwerk oder für das ganze Flugzeug angetrieben werden. Es ist dann zur Abtrennung des Gasturbinentriebwerks von dem Getriebe zweckmäßig, zwischen dem Gasturbinentriebwerk und dem Getriebe eine ausrückbare Kupplung anzuordnen. Diese Kupplung sorgt dafür, daß während der Prüfphase vor dem Start mit dem Hilfsantrieb alle Einrichtungen des Gasturbinentriebwerks und des Flugzeugs - ohne daß das Gasturbinentriebwerk selbst mitrotiert - angetrieben werden können. Beim Starten wird dann lediglich die Kupplung eingerückt und das Gasturbinentriebwerk angelassen. Bei laufendem Haupttriebwerk kann der Hilfsantrieb abgeschaltet werden und das Gasturbinentriebwerk übernimmt selbst den Antrieb des Getriebes. Der Start des Flugzeugs kann erfolgen.

Ein einzelner Hilfsantrieb kann gleichermaßen für zwei Gasturbinentriebwerke gleichzeitig vorgesehen sein, wobei die Energie des Hilfsantriebs dann wahlweise auf die eine oder andere Luftturbine des einen oder anderen Gasturbinentriebwerks geleitet wird. In einer vorteilhaften Ausgestaltung der Erfindung ist es weiter vorgesehen, die Verdichterausgänge der Gasturbinentriebwerke und den Verdichterausgang des Hilfsantriebs sowie die beiden Luftturbineneingänge über entsprechende Ventile so miteinander zu verbinden, daß wahlweise mit der pneumatischen Energie des Hilfsantriebs oder des einen oder anderen Triebwerks die eine oder andere Luftturbine beaufschlagt werden kann. So ist es möglich, mit einem laufenden Gasturbinentriebwerk das andere noch nicht gestartete Gasturbinentriebwerk über die Verdichterluftkopplung anzulassen.

In einer weiteren vorteilhaften Ausgestaltung der Erfindung ist die elektrische Leistung des Generators bzw. des Starter-Generators so bemessen, daß die gesamte Avionik des Flugzeugs und eine Brennstoffpumpe für den Hilfsantrieb mit elektrischer Energie versorgt werden kann. Der Prüfvorgang vor dem Start des Flugzeugs kann somit nur mit laufendem Hilfsantrieb und ohne angetriebenem Getriebe erfolgen. Erst wenn wirklich die weiteren Hilfsenergien, wie z. B. die Hydraulik, benötigt werden, wird die pneumatische Energie des Hilfsantriebs auf die Luftturbine geleitet und das Getriebe angetrieben. Ein Prüfvorgang vor dem Start kann auf diese Weise besonders energiesparend abgewickelt werden.

Weitere Merkmale und Vorteile der Erfindung ergeben sich aus den weiteren Ansprüche, der nachfolgenden Beschreibung und der Zeichnung, die Ausführungsbeispiele der Erfindung schematisch darstellt. Es zeigt:

Fig. 1 eine schematische Darstellung eines erfindungsgemäßen Hilfsantriebs mit zwei getrennten Verdichterstufen,

Fig. 2 eine Darstellung nach Fig. 1 mit nur einer einzigen Verdichterstufe,

Fig. 3 eine schematische Darstellung einer Antriebsanordnung mit einem Hilfsantrieb nach Fig. 2 zur Versorgung zweier getrennter Gasturbinentriebwerke.

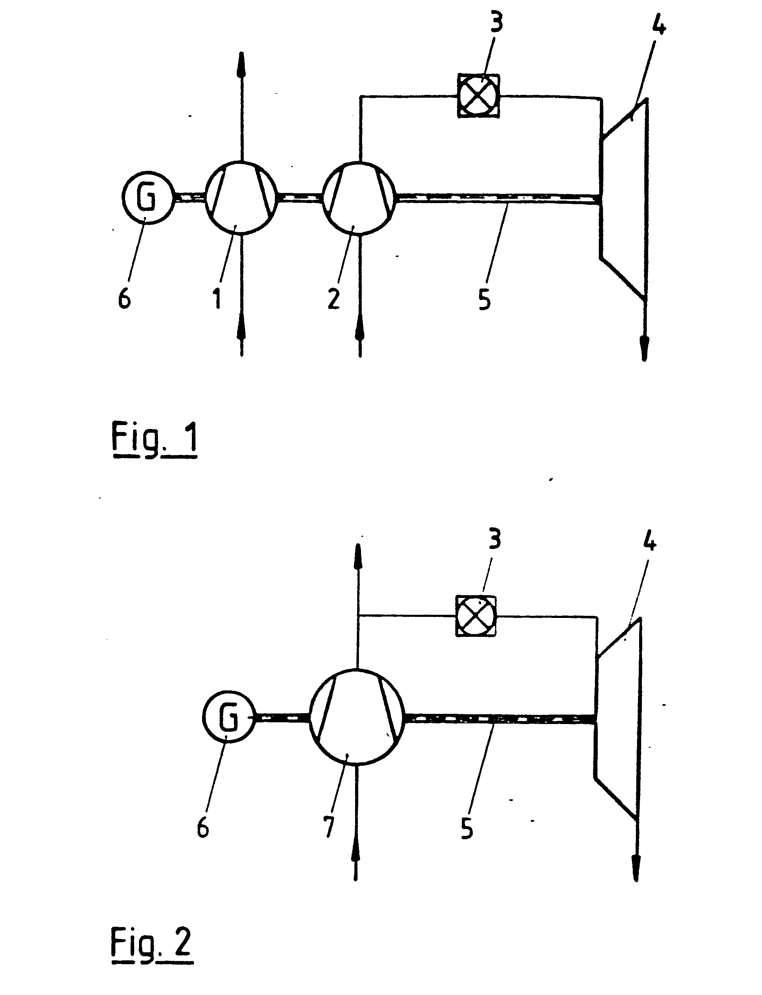

Der in Fig. 1 gezeigte Hilfsantrieb für ein Gasturbinentriebwerk weist zwei getrennte Verdichterstufen 1 und 2, eine Brennkammer 3 und eine Turbine 4 auf. Beide Verdichterstufen 1, 2 und die Turbine 4 sind auf einem Rotor 5 angeordnet, auf dem ferner ein Starter-Generator 6 vorgesehen ist. Anstelle des hochtourigen Starter-Generators 6 können auch zwei getrennte Aggregate, ein Starter und ein Generator, eingebaut werden, die dann beide getriebelos und fest mit dem Rotor 5 verbunden sind. Die von dem Hilfsantrieb erzeugte pneumatische Energie wird einzig von dem Verdichter 1 in Form von komprimierter Luft an das Gasturbinentriebwerk bzw. an dessen Getriebe abgegeben. Folglich benötigt der Hilfsantrieb kein eigenes Getriebe zur Energieabgabe. Eine zum Betrieb des Hilfsantriebs notwendige Brennstoffpumpe wird elektrisch durch die Energie des Starter-Generators 6 angetrieben. Auf eine Schmiermittelversorgung für die Lager des Rotors 5 kann im wesentlichen verzichtet werden, da die Lager entweder als hochtourige, mangelgeschmierte Wälzlager oder als Luftlager ausgebildet sind. Im Falle der Luftlagerung wird die zur Luftlagerung notwendig komprimierte Luft einem der beiden Verdichter 1 oder 2 entnommen. Das Luftlager kann jedoch auch selbstansaugend ausgelegt sein. Im Falle der mangelgeschmierten Wälzlagerung benötigen die Lager nur geringfügigste Schmiermittelmengen, die ohne ein herkömmliches Schmiermittelumlaufsystem mit Pumpe, Kühler und Umlauftank zugeführt werden. Es muß gerade eben überhaupt etwas Schmiermittel vorhanden sein, so daß die mangelgeschmierte Wälzlagerung im wesentliche ohne Schmiermittel betreibbar ist. Der in Fig. 1 gezeigte Hilfsantrieb ist somit nach außen vollständig selbständig und durch das Fehlen von üblicherweise zum Betrieb einer Gasturbine notwendige Hilfseinrichtungen besonders gewichts- und raumsparend. Durch den autarken Aufbau des Hilfsantriebs kann dieser auch in räumlicher Entfernung von dem mit Energie zu versorgenden Gasturbinentriebwerk angeordnet werden.

Fig. 2 zeigt einen Hilfsantrieb ähnlich dem in Fig. 1, wobei die Verdichterstufen 1 und 2 durch einen Verdichter 7 ersetzt sind. Der Verdichter 7 ist einstufig ausgebildet und liefert zugleich die für den Hilfsantrieb und für die pneumatische Energieübertragung notwendige komprimierte Luft. Dadurch wird in vorteilhafter Weise ein zusätzliches gewichtsintensives Verdichterrad der zweiten Verdichterstufe eingespart. Die evtl. entsprechenden Wirkungsgradverluste des Verdichters 7 gegenüber der Lösung aus zwei einzelnen, parallelen Verdichterstufen 1 und 2 ist für einen Hilfsantrieb, der nur eine begrenzte Zeit vor dem Startvorgang und während des Startvorganges des eigentlichen als Hauptantrieb vorgesehenen Gasturbinentriebwerks läuft, vertretbar. Der Verdichter ist in diesem Fall in besonders vorteilhafter Weise als Radialverdichter ausgeführt, da ein Radialverdichter in einstufiger Ausführung ein gewünschtes hohes Druckverhältnis liefert. Es wäre für manche Anwendungsfälle auch ein Axialverdichter zweckdienlich, der einstufig oder mehrstufig ausgebildet sein kann.

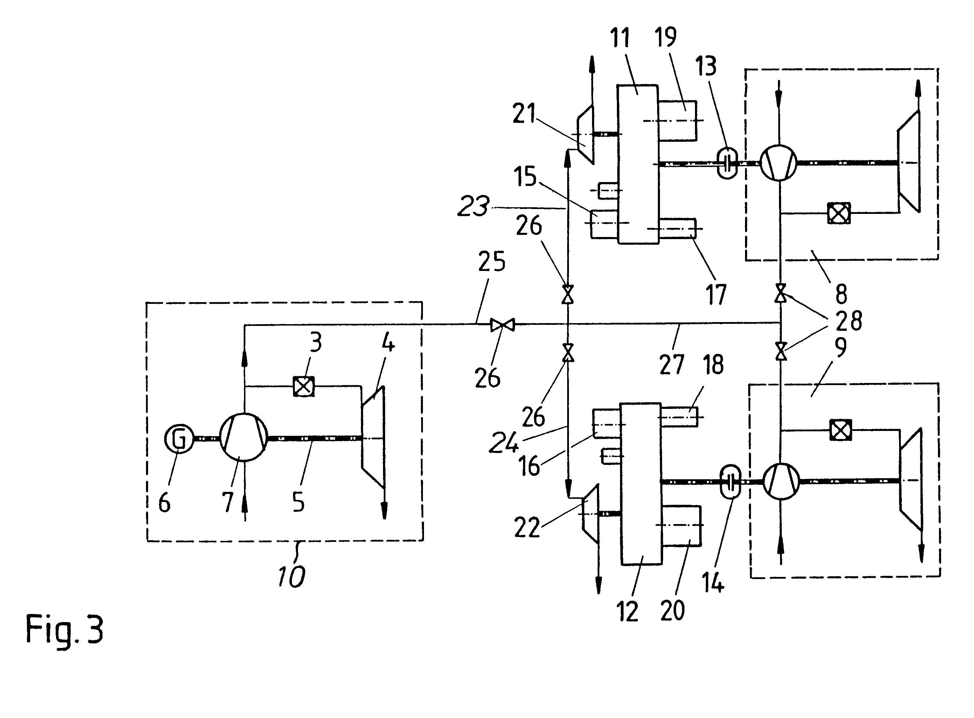

In Fig. 3 ist beispielhaft eine gesamte Antriebsanlage eines Flugzeugs bestehend aus zwei getrennten als Haupttriebwerke vorgesehene Gasturbinentriebwerke 8, 9 und einen Hilfsantrieb 10 gezeigt. Der Hilfsantrieb 10 entspricht dabei demjenigen in Fig. 2. Sowohl das erste Gasturbinentriebwerk 8 als auch das zweite Gasturbinentriebwerk 9 ist mit einem Getriebe 11 und 12 über eine ausrückbare Kupplung 13 und 14 verbunden. Über das Getriebe 11, 12 werden die verschiedenen Hilfseinrichtungen des Gasturbinentriebwerks 8 oder 9 bzw. des gesamten Flugzeugs angetrieben. Hier sei insbesondere jeweils ein Generator 15, 16, je eine Hydraulikpumpe 17, 18 und je eine Treibstoffpumpe 19, 20 erwähnt. Jedes der Getriebe 11, 12 wird andererseits von einer Luftturbine 21, 22 mechanisch angetrieben, wobei jede dieser Luftturbinen 21, 22 über Leitungen 23, 24, 25 mit dem Verdichter 7 des Hilfsantriebs 10 verbunden ist. Durch entsprechende Ventile 26 in den Leitungen 23, 24, 25 wird entweder die eine Luftturbine 21 oder die andere Luftturbine, 22 mit komprimierter Luft von dem Verdichter 7 des Hilfsantriebs 10 beaufschlagt. Ferner ist jeder Triebwerksverdichter der Gasturbinentriebwerke 8, 9 über Leitungen 27 und Ventile 28 mit dem Eingang der Luftturbinen 21 und 22 verbunden.

Soll das Flugzeug gestartet werden, wird zunächst die Gasturbine des Hilfsantriebs 10 elektrisch über den Starter-Generator 6 angeworfen. Nachdem der Hilfsantrieb läuft, produziert der Starter-Generator 6 ausreichend elektrische Leistung, um sowohl die elektrische Brennstoffpumpe für den Hilfsantrieb als auch die gesamte Avionik des Flugzeugs mit elektrischer Energie zu versorgen. Noch vor dem Inbetriebsetzen der Getriebe 11 oder 12 kann so ein Großteil der elektrisch Einrichtung des Flugzeugs, insbesondere die Avionik gecheckt werden. Danach wird durch Öffnen der Ventile 26 die eine Luftturbine 21 mit verdichteter Luft beaufschlagt. Das Getriebe 11 wird somit angetrieben, wogegen das Gasturbinentriebwerk 8 infolge der ausgerückten Kupplung 13 noch stillsteht. Jetzt wird von dem Generator 15 und der Hydraulikpumpe 17 genügend elektrische und hydraulische Energie geliefert um alle noch evtl. verbliebenen nicht gecheckten Flugzeugsysteme vor dem Start zu prüfen. Der gleiche Vorgang kann mit dem Getriebe 12 durchgeführt werden. Das gesamte Flugzeug ist somit außer den Triebwerken 8, 9 vollständig betriebsbereit und durchgecheckt. Erst jetzt wird die eine Kupplung 13 eingerückt und das Gasturbinentriebwerk 8 angetrieben. Dabei ist zweckmäßigerweise die andere Luftturbine 22 nicht mit verdichteter Luft beaufschlagt. Nach dem Hochlaufen des ersten Gasturbinentriebwerks 8 kann durch Öffnen des Ventils 28 über die Leitung 27 die Luftturbine 22 des zweiten Triebwerks 9 mit verdichteter Luft des ersten Gasturbinentriebwerks 8 beaufschlagt werden. Auf diese Weise startet das erste Gasturbinentriebwerk 8 das zweite Gasturbinentriebwerk 9. In vorteilhafter Weise ist es auch zweckmäßig, das zweite Gasturbinentriebwerk 9 auf die gleiche Weise wie das erste Gasturbinentriebwerk 8 anzulassen. Eine derartige Antriebsanordnung ist im höchsten Maße autark von am Boden befindlichen Einrichtungen und außerdem durch ein Minimum an Getriebeaufwand und dazu notwendiger Ölversorgung außerordentlich gewichtsgünstig.

Die in Fig. 3 gezeigte Schaltung eines Hilfsantriebs 10 mit zwei Gasturbinentriebwerken 8, 9 ist auch für nur ein Gasturbinentriebwerk 8 zweckmäßig. In diesem Fall entfällt die Leitung 27 und der zweite Getriebeblock 12.

## Patentansprüche

1. Hilfsantrieb für zumindest ein Gasturbinentriebwerk (8), insbesondere zum Starten des Gasturbinentriebwerks (8), mit einem Hilfsturbinentriebwerk, das einen Rotor (5), der in zumindest einem Lager gelagert ist, zumindest einen Verdichter (7), eine Turbine (4) und eine Brennkammer (3) aufweist und mit Hilfsaggregaten, wie z. B. eine Brennstoffpumpe, wobei das Hilfsturbinentriebwerk zur Energieübertragung ausschließlich pneumatisch mit einer Luftturbine (21, 22) des Gasturbinentriebwerks (8) verbunden ist,
dadurch gekennzeichnet, daß das Hilfsturbinentriebwerk auch bezüglich der Hilfsaggregate getriebelos und dadurch schmiermittelfrei ausgebildet ist, daß ein Starter und ein Generator unmittelbar mit dem Rotor fest verbunden sind, daß die Hilfsaggregate elektrisch angetrieben sind und daß die Lager des Rotors im wesentlichen schmiermittelfrei betreibbar sind.

2. Hilfsantrieb nach Anspruch 1,
dadurch gekennzeichnet, daß der Starter und der Generator zu einem einzigen Starter-Generator (6) zusammengefaßt sind.

3. Hilfsantrieb nach Anspruch 1 oder 2,
dadurch gekennzeichnet, daß die verdichtete Luft nach dem Verdichter (7) in zwei Teilströme aufteilbar ist, wobei ein Teilstrom der Turbine (4) über die Brennkammer (3) zuführbar ist und ein Teilstrom zur Energieübertragung der Luftturbine (21, 22) des Gasturbinentriebwerks (8) zuführbar ist.

4. Hilfsantrieb nach einem der Ansprüche 1 bis 3,
dadurch gekennzeichnet, daß die Lager des Rotors (5) als mangelgeschmierte, hochtourige Wälzlager ausgebildet sind.

5. Hilfsantrieb nach einem der Ansprüche 1 bis 3,
dadurch gekennzeichnet, daß die Lager des Rotors (5) als Luftlager ausgebildet sind.

6. Hilfsantrieb nach einem der Ansprüche 1 bis 3,
dadurch gekennzeichnet, daß zwei Lager für den Rotor (5) vorgesehen sind und daß das turbinenseitige Lager als Luftlager und das verdichterseitige Lager als mangelgeschmiertes, hochtouriges Wälzlager ausgebildet ist.

7. Hilfsantrieb nach einem der Ansprüche 1 bis 6,

dadurch gekennzeichnet, daß die Luftturbine (21, 22) des Gasturbinentriebwerks (8, 9) mit einem Getriebe (11, 12) verbunden ist, wobei durch das Getriebe (11, 12) zumindest ein Generator (15, 16) und eine Hydraulikpumpe (17, 18) sowie weitere Hilfseinrichtungen für das Gasturbinentriebwerk (8, 9) antreibbar sind.

8. Hilfsantrieb nach Anspruch 7,

dadurch gekennzeichnet, daß zwischen dem Getriebe (11, 12) und dem Gasturbinentriebwerk (8, 9) eine Kupplung (13, 14) vorgesehen ist.

9. Hilfsantrieb nach Anspruch 7 oder 8,

dadurch gekennzeichnet, daß zwei Gasturbinentriebwerke (7, 8) mit je einem Getriebe (11, 12), einer Luftturbine (21, 22) und gegebenenfalls einer Kupplung (13, 14) vorgesehen sind, wobei beide Getriebe (11, 12) dieselben Hilfseinrichtungen aufweisen und daß mit der pneumatischen Energie des Hilfsturbinentriebwerks (10) wahlweise die eine oder die andere Luftturbine (21, 22) beaufschlagbar ist.

10. Hilfsantrieb nach Anspruch 9,

dadurch gekennzeichnet, daß die Gasturbinentriebwerke (8, 9) mechanisch voneinander unabhängig ausgebildet sind und daß die Verdichterausgänge beider Gasturbinentriebwerke (8, 9) mit beiden Luftturbinen (21, 22) verbindbar sind.

11. Hilfsantrieb nach einem der Ansprüche 1 bis 10, wobei der Hilfsantrieb (10) mit dem Gasturbinentriebwerk (8, 9) in einem Flugzeug eingebaut ist,

dadurch gekennzeichnet, daß die elektrische Leistung des Generators bzw. des Starter-Generators (6) stärker, als es zum Betrieb der Hilfsaggregate notwendig wäre, ausgelegt ist und in etwa zum Betrieb der Avionik des Flugzeugs während der Prüfphase vor dem Start und zum gleichzeitigen Betrieb der Brennstoffpumpe ausreichend ausgelegt ist.

## Claims

1. An auxiliary power unit for at least one gas-turbine engine (8), the auxiliary unit serving especially for starting the turbine engine (8) and comprising an auxiliary turbine engine provided with a rotor (5) supported by at least one bearing, with at least one compressor (7), a turbine (4), a combustion chamber (3) and with ancillary appliances, for example a fuel pump, wherein the auxiliary unit is connectable, for the purpose of power transmission, solely pneumatically to an air turbine (21, 22) of the or each turbine engine (8), characterized in that the auxiliary power unit - including even its ancillary appliances - is constructed gearlessly, and thus lubricant-free, that a starter and a generator are directly fastened to the rotor, that the ancilliary appliances are arranged to be driven electrically, and in that the or each rotor bearing is operable substantially lubricant-free.

2. An auxiliary power unit according to claim 1, characterized in that the starter and the generator are combined to form a single starter/generator unit (6).

3. An auxiliary power unit according to claim 1 or claim 2, characterized in that the compressed air is splittable downstream of the compressor (7) into two part-streams, and in that the one part-stream is feedable through the combustion chamber (3) to the turbine (4) whilst the other part-stream is feedable, for the purpose of transmission, to the air turbine (21, 22) of the gas turbine engine (8).

4. An auxiliary power unit according to any of the claims 1 to 3, characterized in that the or each bearing of the rotor (5) is an underlubricated high-speed anti-friction bearing.

5. An auxiliary power unit according to any of the claims 1 to 3, characterized in that the or each bearing of the rotor (5) is an air bearing.

6. An auxiliary power unit according to any of the claims 1 to 3, characterized in that the rotor (5) is supported by two bearings, and in that the one bearing disposed in the region of the turbine is an air bearing whilst the other bearing disposed in the region of the compressor is an underlubricated high-speed anti-friction bearing.

7. An auxiliary power unit according to any of the claims 1 to 6, characterized in that the air turbine (21, 22) of each turbine engine (8, 9) is connected to a respective gear train (11, 12), and in that at least one generator (15, 16), a hydraulic pump (17, 18) and additional ancilliary appliances of each turbine engine (8, 9) are arranged to be driven via the respective gear train (11, 12).

8. An auxiliary power unit according to claim 7, characterized in that a clutch (13, 14) is arranged between each gear train (11, 12) and the respective turbine engine (8, 9).

9. An auxiliary power unit according to claim 7 or claim 8, characterized in that two gas-turbine engines (7, 8) - each including its respective gear train (11, 12), air turbine (21, 22) and, possibly, clutch (13, 14) - are provided, that each of the two gear trains (11, 12) is provided with the same ancilliary appliances, and in that the pneumatic power of the auxiliary power unit (10) is selectively admittable to the one or the other air turbine (21, 22).

10. An auxiliary power unit according to claim 9, characterized in that the turbine engines (8, 9) are constructed as mechanically self-contained units, and in that the compressor outlet of each of the two turbine engines (8, 9) is connectable to both air turbines (21, 22).

11. An auxiliary power unit according to any of the claims 1 to 10, wherein the auxiliary power unit (10) and the turbine engine or engines (8, 9) have been installed in an aeroplane, characterized in that the generator or the starter/generator (6) is designed so as to generate electric power in excess of that required for the operation of the ancillary appliances, and in that the design is such as to substantially suffice for operating, during the test stage prior to starting, the plane's avionics and for simultaneously driving the fuel injection pump.

**Revendications**

1. Entraînement auxiliaire pour au moins un groupe d'entraînement à turbine à gaz (8), notamment pour démarrer le groupe d'entraînement auxiliaire à turbine à gaz (8), comprenant un groupe d'entraînement à turbine présentant un rotor (5) monté sur au moins un palier, au moins un compresseur (7), une turbine (4) et une chambre de combustion (3) et des groupes auxiliaires, tels que par exemple une pompe de carburant, le groupe d'entraînement auxiliaire à turbine destiné à la transmission d'énergie étant exclusivement relié pneumatiquement à une turbine pneumatique (21, 22) du groupe d'entraînement à turbine à gaz (8), caractérisé en ce que le groupe d'entraînement auxiliaires à turbine est, également, réalisé sans transmission pour ce qui concerne les groupes auxiliaires et, de ce fait, exempt de tout milieu lubrifiant, en ce qu'un démarreur et un générateur sont directement reliés rigidement au rotor, en ce que les groupes auxiliaires sont entraînés électriquement et en ce que les paliers du rotor sont susceptibles de fonctionner principalement en l'absence de tout milieu lubrifiant.

2. Entraînement auxiliaire selon la revendication 1, caractérisé en ce que le démarreur et le générateur sont groupés en un générateur-démarreur (6) unique.

3. Entraînement auxiliaire selon la revendication 1 ou 2, caractérisé en ce qu'en aval du compresseur (7), l'air comprimé est susceptible d'être réparti en deux débits partiels, un débit partiel pouvant être amené à la turbine (4) et un débit partiel de transmission d'énergie à la turbine pneumatique (21, 22) du groupe d'entraînement à turbine à gaz (8).

4. Entraînement auxiliaire selon l'une des revendications 1 à 3, caractérisé en ce que les paliers du rotor (5) sont réalisés sous forme de paliers à roulement à haute vitesse, à lubrification limite.

5. Entraînement auxiliaire selon l'une des revendications 1 à 3, caractérisé en ce que les paliers du rotor (5) sont réalisés sous forme de paliers à air.

6. Entraînement auxiliaire selon l'une des revendications 1 à 3, caractérisé en ce que deux paliers sont prévus pour le rotor (5) et en ce que le palier situé côté turbine est réalisé sous forme de palier à air et que le palier situé côté compresseur est réalisé sous forme de palier à roulement à haute vitesse, à lubrification limite.

7. Entraînement auxiliaire selon l'une des revendications 1 à 6, caractérisé en ce que la turbine pneumatique (21, 22) du groupe d'entraînement à turbine à gaz (8, 9) est relié à une transmission (11, 12), au moins un générateur (15, 16) et une pompe hydraulique (17, 18) ainsi que d'autres équipements auxiliaires destinés au groupe d'entraînement à turbine à gaz (8, 9) pouvant être entraînés au moyen de la transmission (11, 12).

8. Entraînement auxiliaire selon la revendication 7, caractérisé en ce qu'un accouplement d'embrayage (13, 14) est prévu entre la transmission (11, 12) et le groupe d'entraînement à turbine à gaz (8, 9).

9. Entraînement auxiliaire selon la revendication 7 ou 8, caractérisé en ce que sont prévues deux groupes d'entraînement à turbine à gaz (7, 8), avec chacun une transmission (11, 12), une turbine pneumatique (21, 22) et, le cas échéant, un accouplement (13, 14), les deux transmissions (11, 12) présentant les mêmes équipements auxiliaires et en ce qu'une turbine pneumatique ou l'autre (21, 22) est susceptible d'être sollicitée au choix par l'énergie pneumatique du groupe d'entraînement à turbine auxiliaire (10).

10. Entraînement auxiliaire selon la revendication 9, caractérisé en ce que les groupes d'entraînement à turbine à gaz (8, 9) sont réalisés mécaniquement indépendants l'un par rapport à l'autre et que les sorties de compresseur des deux groupes d'entraînement à turbine à gaz (8, 9) sont susceptibles d'être reliées aux deux turbines pneumatiques (21, 22).

11. Entraînement auxiliaire selon l'une des revendications 1 à 10, l'entraînement auxiliaire (10) est monte, avec le groupe d'entraînement à turbine à gaz (8, 9), dans un avion, caractérisé en ce que la puissance électrique du générateur, ou du démarreur- générateur (6) est déterminée pour être plus importante que ce qui serait nécessaire au fonctionnement des groupes auxiliaires, et est déterminée pour être suffisante au fonctionnement de l'avionique de l'avion pendant la phase de contrôle avant le démarrage et pour le fonctionnement simultané de la pompe de carburant.

Fig. 1

Fig. 2

Fig. 3